# EUROPEAN PATENT APPLICATION

(11) **EP 4 503 278 A1**
(43) Date of publication of application: **05.02.2025**
(21) Application number: 23899462.8
(22) Date of filing: 16.08.2023
(51) Int. Cl.: H01M 50/184, H01M 50/103, H01M 50/553

(54) **BATTERY AND ELECTRONIC PRODUCT**

(30) Priority: 05.12.2022 CN 202223245879 U
(71) Applicant: Zhuhai CosMX Battery Co., Ltd., Zhuhai, Guangdong 519180 (CN)
(72) Inventor: WEI, Zhida, Zhuhai, Guangdong 519180 (CN); XIE, Jichun, Zhuhai, Guangdong 519180 (CN); ZHANG, Hui, Zhuhai, Guangdong 519180 (CN); LI, Chengbei, Zhuhai, Guangdong 519180 (CN); YI, Peng, Zhuhai, Guangdong 519180 (CN); XI, Yang, Zhuhai, Guangdong 519180 (CN)
(74) Representative: Elzaburu S.L.P.
(86) International application number: PCT/CN2023/113347
(87) International publication number: WO 2024/119877

(57) **Abstract**

The present invention provides a battery and an electronic product. The battery provided by the present invention includes battery cell, a housing, a terminal post base and a first insulator, where the housing is provided with an accommodating cavity, and the battery cell is arranged in the accommodating cavity; the terminal post base includes a body and a terminal post, a terminal post hole is arranged on a side wall of the housing, the first insulator is arranged between the housing and the body, and a first positioning hole opposite to the terminal post hole is arranged on the first insulator, and the terminal post sequentially passes through the first positioning hole and the terminal post hole, and the terminal post is connected to a tab of the battery cell; the first insulator is further provided with a third limiting part, and an outer side wall of the housing is provided with a fourth limiting part, and the third limiting part is snap-fitted with the fourth limiting part. The battery and the electronic product provided in the present invention improve the qualified rate of the battery production.

## Description

The present application claims priority to Chinese Patent Application No. 202223245879.5 filed with China National Intellectual Property Administration on December 5, 2022 and entitled "BATTERY AND ELECTRONIC PRODUCT", which is hereby incorporated by reference in its entirety.

### TECHNICAL FIELD

The present invention relates to the technical field of new energy, in particular to a battery and an electronic product.

### BACKGROUND

Battery is an apparatus which converts chemical energy into electric energy, and is widely used in life. With the development of battery industry, the requirements of enterprises for battery production efficiency and qualified rate are getting higher and higher.

The existing battery includes a battery cell and a housing, and generally a terminal post is used to lead electrical property of the positive electrode of the battery cell to be out of the housing. Specifically, the terminal post and the housing are separated by an insulator, and then the terminal post, the housing and the insulator are fixedly connected.

However, the inventor found that when fixing the terminal post, the housing and the insulator, the insulator and the housing of the battery are prone to relative rotation, which leads to the instability of subsequent fixing and reduces the qualified rate of the battery.

### SUMMARY

In order to solve at least one problem mentioned in the Background, the present invention provides a battery and an electronic product, which improves the qualified rate of the battery in production.

In order to achieve the above object, the present invention provides the following technical solutions.

In a first aspect, the present invention provides a battery, which includes a battery cell, a housing, a terminal post base and a first insulator, where the housing is provided with an accommodating cavity, and the battery cell is arranged in the accommodating cavity; the terminal post base includes a body and a terminal post, a terminal post hole is arranged on a side wall of the housing, the first insulator is arranged between the housing and the body, and a first positioning hole opposite to the terminal post hole is arranged on the first insulator, and the terminal post sequentially passes through the first positioning hole and the terminal post hole, and the terminal post is connected to a tab of the battery cell; the first insulator is further provided with a third limiting part, and an outer side wall of the housing is provided with a fourth limiting part, and the third limiting part is snap-fitted with the fourth limiting part.

In an optional implementation, one of the third limiting part and the fourth limiting part is a groove, and the other is a protrusion embedded in the groove.

In an optional implementation, the body is provided with a first limiting part, and the first insulator is further provided with a second limiting part, and the first limiting part is snap-fitted with the second limiting part.

In an optional implementation, one of the first limiting part and the second limiting part is a groove, and the other is a protrusion.

In an optional implementation, the first limiting part is located on one side of the body facing the battery cell, and the second limiting part is arranged facing the body.

In an optional implementation, there are a plurality of first limiting parts, which are arranged on the body side by side.

In an optional implementation, a conductive connector is further included, and the conductive connector is located in the housing and connected with the tab of the battery cell.

In an optional implementation, there is a gap between the fourth limiting part and the conductive connector.

In an optional implementation, a second insulator is further included, the second insulator is located at an inner side of the housing and is isolated between the housing and the conductive connector, and the second insulator and the conductive connector are snap-fitted with each other.

In an optional implementation, a sixth limiting part is provided on a side of the second insulator facing away from the housing, and a seventh limiting part is provided on a side of the conductive connector close to the second insulator, and the sixth limiting part and the seventh limiting part are snap-fitted with each other.

In an optional implementation, shapes of the first limiting part, the second limiting part, the third limiting part, the fourth limiting part, the sixth limiting part and the seventh limiting part are square, circular or triangular.

In an optional implementation, diameters of the first limiting part, the second limiting part, the third limiting part, the fourth limiting part, the sixth limiting part and the seventh limiting part are all greater than 0.5 mm.

In a second aspect, the present invention provides an electronic product, which includes any one of the batteries in the first aspect.

The battery provided by the present invention includes a battery cell, a housing, a terminal post base and a first insulator, where the housing is provided with an accommodating cavity, and the battery cell is arranged in the accommodating cavity; the terminal post base includes a body and a terminal post, a terminal post hole is arranged on a side wall of the housing, the first insulator is arranged between the housing and the body, and a first positioning hole opposite to the terminal post hole is arranged on the first insulator, and the terminal post sequentially passes through the first positioning hole and the terminal post hole, and the terminal post is connected to a tab of the battery cell; the first insulator is further provided with a third limiting part, and an outer side wall of the housing is provided with a fourth limiting part, and the third limiting part is snap-fitted with the fourth limiting part. In the battery provided by the present invention, by arranging the third limiting part on the first insulator and arranging the fourth limiting part matched with the third limiting part on the outer side wall of the housing, when the first insulator is assembled with the housing of the battery, the third limiting part on the first insulator may be snap-fitted with the fourth limiting part on the housing, thereby preventing the first insulator from rotating relative to the housing of the battery, and improving the qualified rate and efficiency of the battery in production.

### BRIEF DESCRIPTION OF DRAWINGS

To describe the technical solutions in the present invention or in the prior art more clearly, the following briefly introduces the accompanying drawings needed for describing the embodiments or the prior art. Apparently, the accompanying drawings in the following description illustrate merely some embodiments of the present invention, and persons of ordinary skill in the art may still derive other drawings from these accompanying drawings without creative effort.
FIG. 1 is an overall structural schematic diagram of a battery according to an embodiment of the present invention.
FIG. 2 is an exploded diagram of a battery according to an embodiment of the present invention.
FIG. 3 is a side view of a battery according to an embodiment of the present invention.
FIG. 4 is a cross-sectional view taken along A-A in FIG. 3.
FIG. 5 is an enlarged diagram of A in FIG. 4.
FIG. 6 is an assembly diagram of FIG. 5.

### Description of reference signs:

100- battery;
110- battery cell;
120- housing;
121- terminal post hole;
122- fourth limiting part;
130- terminal post base;
131- body;
132- terminal post;
133- first limiting part;
140- first insulator;
141- first positioning hole;
142- second limiting part;
143- third limiting part;
150- conductive connector;
151- third positioning hole;
152- seventh limiting part;
160- second insulator;
161- second positioning hole;
162- fifth limiting part;
163- sixth limiting part.

### DESCRIPTION OF EMBODIMENTS

The following will describe the solutions of the embodiments of the present invention clearly and completely with reference to the accompanying drawings of the embodiments of the present invention. Apparently, the described embodiments are merely some of the embodiments of the present invention, but not all embodiments. All other embodiments obtained by persons of ordinary skill in the art without creative effort fall within the scope of protection of the present invention.

In the present application, the terms "up", "down", "left", "right", "front", "back", "top", "bottom", "inside", "outside", "vertical", "horizontal", "lateral", "longitudinal" and etc. indicate the azimuth or positional relationship that are based on the azimuth or positional relationship in the accompanying drawings. These terms are mainly used to better describe the present invention and the embodiments thereof, and are not used to limit that the indicated apparatus, elements or components must have a specific orientation or be constructed and operated in a specific orientation.

Moreover, some of the above terms may be used to indicate other meanings in addition to the orientation or positional relationship. For example, the term "up" may also be used to indicate a certain dependency or connection relationship in some cases. For persons of ordinary skill in the art, the specific meanings of these terms in the present invention may be understood according to specific situations.

In addition, the terms "install", "arrange", "provide", "connect" and "coupled" should be understood broadly. For example, they may be a fixed connection, a detachable connection, or an integral structure; may be mechanical connection, or electrical connection; may be directly connected, indirectly connected through an intermediary, or may be internal communication between two apparatus, elements or components. For persons of ordinary skill in the art, the specific meanings of these terms in the present invention may be understood according to specific situations.

In addition, the terms "first" and "second" are mainly used to distinguish different apparatus, elements or components (specific types and structures may be the same or different), and are not used to indicate or imply the relative importance and quantity of the indicated apparatus, elements or components. Unless otherwise specified, "a plurality of" means two or more.

Battery is an apparatus that converts chemical energy into electric energy, and is widely used in life. With the development of battery industry, the requirements of enterprises for battery production efficiency and qualified rate are getting higher and higher. The existing battery includes a battery cell and a housing, and the electrical property of the positive electrode of the battery cell is generally led out of the housing through a terminal post. Specifically, the terminal post and the housing are separated by an insulator, and then the terminal post, the housing and the insulator are fixedly connected with each other. However, the inventor found that when fixing the terminal post, the housing and the insulator, the insulator and the housing of the battery are prone to relative rotation, which leads to the instability of subsequent fixing and reduces the qualified rate of the battery.

In view of this, the present invention provides a battery, the battery includes a battery cell, a housing, a terminal post base and a first insulator, where the housing is provided with an accommodating cavity, and the battery cell is arranged in the accommodating cavity; the terminal post base includes a body and a terminal post, a terminal post hole is arranged on a side wall of the housing, the first insulator is arranged between the housing and the body, and a first positioning hole opposite to the terminal post hole is arranged on the first insulator, and the terminal post sequentially passes through the first positioning hole and the terminal post hole, and the terminal post is connected to a tab of the battery cell; the first insulator is further provided with a third limiting part, and an outer side wall of the housing is provided with a fourth limiting part, and the third limiting part is snap-fitted with the fourth limiting part. According to the battery provided by the present invention, by arranging the third limiting part on the first insulator and arranging the fourth limiting part matched with the third limiting part on the outer side wall of the housing, when the first insulator is assembled with the housing of the battery, the third limiting part on the first insulator may be snap-fitted with the fourth limiting part on the housing, thereby preventing the first insulator from rotating relative to the housing of the battery, and improving the qualified rate and efficiency of the battery in production.

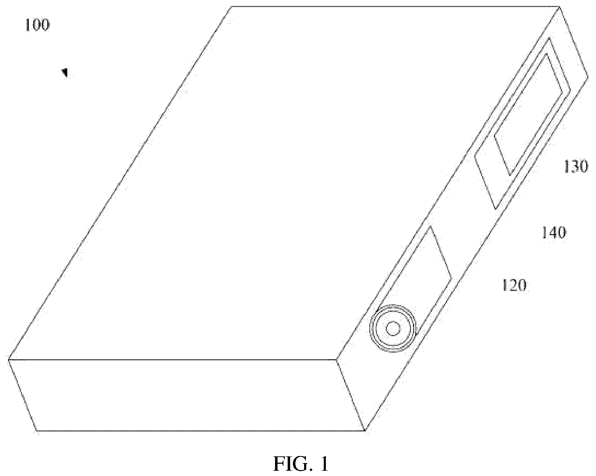

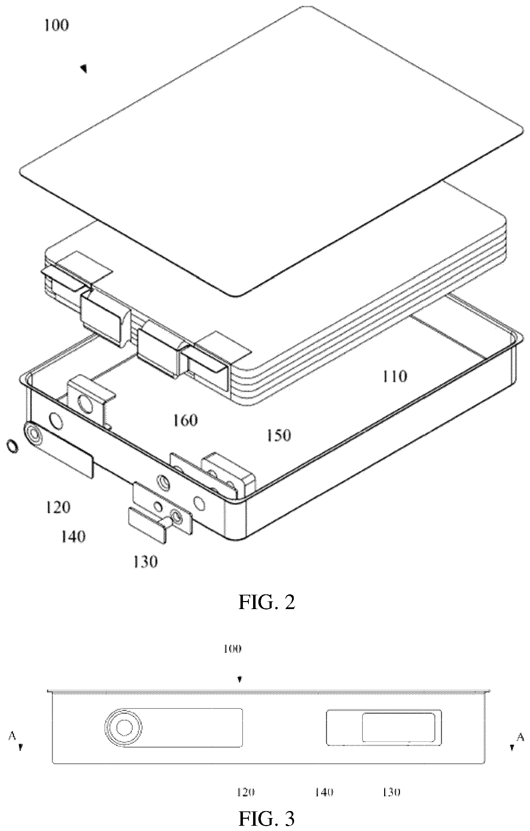

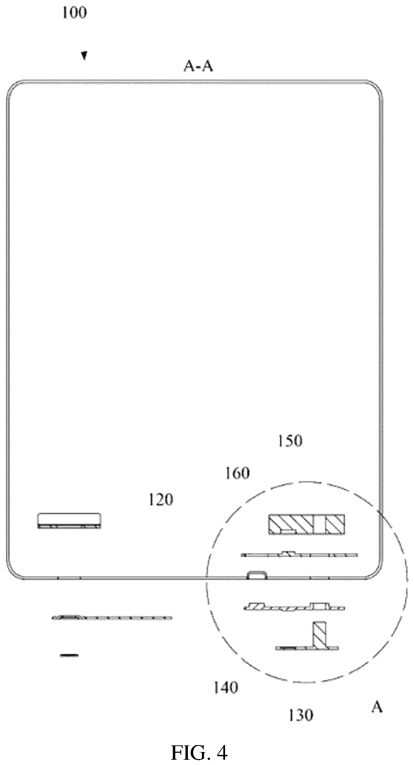

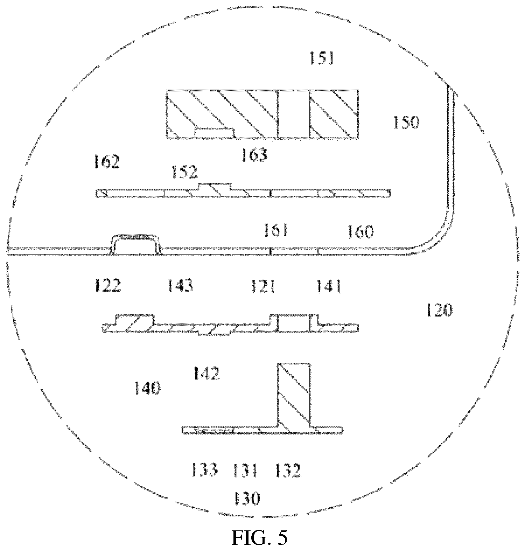

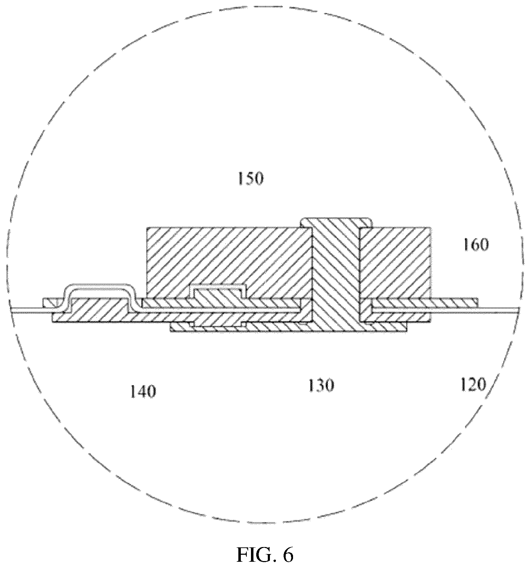

FIG. 1 is an overall structural schematic diagram of a battery according to an embodiment of the present invention; FIG. 2 is an exploded diagram of a battery according to an embodiment of the present invention; FIG. 3 is a side view of a battery according to an embodiment of the present invention; FIG. 4 is a cross-sectional view taken along A-A in FIG. 3; FIG. 5 is an enlarged diagram of A in FIG. 4; and FIG. 6 is an assembly diagram of FIG. 5. As shown in FIGS. 1 to 6, an embodiment of the present invention provides a battery 100, the battery includes a battery cell 110, a housing 120, a terminal post base 130 and a first insulator 140, where the housing 120 is provided with an accommodating cavity, and the battery cell 110 is arranged in the accommodating cavity; the terminal post base 130 includes a body 131 and a terminal post 132, a terminal post hole 121 is arranged on a side wall of the housing 120, the first insulator 140 is arranged between the housing 120 and the body 131, and a first positioning hole 141 opposite to the terminal post hole 121 is arranged on the first insulator 140, and the terminal post 132 sequentially passes through the first positioning hole 141 and the terminal post hole 121, and the terminal post 132 is connected to a tab of the battery cell 110; the first insulator 140 is further provided with a third limiting part 143, and an outer side wall of the housing 120 is provided with a fourth limiting part 122, and the third limiting part 143 is snap-fitted with the fourth limiting part 122.

Where, the battery cell 110 includes a negative electrode formed by a negative electrode material, a positive electrode formed by a positive electrode material, and a separator for separating the positive and negative electrodes. The battery cell 110 may be arranged in a core wound type, a laminated type, etc., and this embodiment does not specifically limit this.

It should be noted that the housing 120 is used to protect the battery cell 110 therein, and the housing 120 may be spliced by two parts to facilitate installation. The material of the housing 120 may be stainless steel, which is sturdy and corrosionresistant. Apparently other materials may also be used for the housing 120, and this embodiment does not specifically limit this.

It should be noted that a main function of the terminal post base 130 is to electrically lead the electrical property of the positive electrode of the battery cell 110 to be out of the housing 120 of the battery 100 to facilitate the use. The terminal post base 130 may be formed by a material with good conductivity, such as copper, aluminum, etc., and is not specifically limited here.

The first insulator 140 may be formed by rubber, resin and other material with good insulation. A main function of the first insulator 140 is to isolate the terminal post base 130 from the housing 120, so as to insulate them. It should be understood that the housing 120 is generally used as the negative electrode of the battery 100, that is, the first insulator 140 is used to isolate the positive and negative electrodes of the battery 100 to ensure the normal operation of the battery 100.

One of assembly methods of the terminal post base 130 is shown in FIGS. 4 to 6. The terminal post base 130 includes the terminal post 132, the first insulator 140 has the first positioning hole 141, and the housing 120 has the terminal post hole 121. During assembly, one end of the terminal post 132 far away from the body 131 may pass through the first positioning hole 141 and the terminal post hole 121 in sequence, and then be electrically connected with the positive electrode of the battery cell 110, so that the electrical property of the positive electrode of the battery cell 110 may be led to be out of the housing 120 through the terminal post 132.

It should be understood that the first insulator 140 should be isolated between the terminal post base 130 and the housing 120. Specifically, as shown in FIGS. 5 and 6, during implementation, a ring of a flange may extend along an edge of the first positioning hole 141 toward a side of the housing 120. When assembling the first insulator 140 with the housing 120, the flange may be embedded in the terminal post hole 121 on the housing 120, and then the terminal post 132 is enabled to pass through the first positioning hole 141. In this way, an outer wall of the terminal post 132 will contact inner walls of the first positioning hole 141 and of the flange (i.e., a contact object is the first insulator 140) instead of an inner wall of the terminal post hole 121 (i.e., the inner wall of the housing 120), so that the first insulator 140 may isolate the terminal post base 130 from the housing 120 to ensure that the positive and negative electrodes of the battery 100 do not interfere with each other and operate normally.

In the battery 100 provided by the present invention, by arranging the third limiting part 143 on the first insulator 140 and arranging the fourth limiting part 122 matched with the third limiting part 143 on the outer side wall of the housing 120, the third limiting part 143 on the first insulator 140 may be snap-fitted with the fourth limiting part 122 on the housing 120 when the first insulator 140 is assembled with the housing 120 of the battery 100, thereby preventing the first insulator 140 from rotating relative to the housing 120 of the battery 100, and improving the qualified rate and efficiency of the battery 100 in production.

In the foregoing embodiments, one of the third limiting part 143 and the fourth limiting part 122 may be a groove, and the other may be a protrusion embedded in the groove. Specifically, as shown in FIGS. 5 and 6, the third limiting part 143 is a protrusion provided on a side of the first insulator 140 facing the housing 120, and the fourth limiting part 122 is a groove provided on a side of the housing 120 far away from the battery cell 110.

Alternatively, the third limiting part 143 is a groove provided on a side of the first insulator 140 close to the housing 120, and the fourth limiting part 122 is a protrusion provided on a side of the housing 120 facing the first insulator 140.

In the foregoing embodiments, the body 131 is provided with the first limiting part 133, and the first insulator 140 is further provided with the second limiting part 142, and the first limiting part 133 is snap-fitted with the second limiting part 142. By arranging the first limiting part 133 on the body 131 of the terminal post base 130 and arranging the second limiting part 142 matched with the first limiting part 133 on the first insulator 140, when the terminal post base 130 is assembled with the first insulator 140, the terminal post 132 on the body 131 of the terminal post base 130 passes through the first positioning hole 141 on the first insulator 140, and at the same time, the first limiting part 133 on the body 131 of the terminal post base 130 is snap-fitted with the second limiting part 142 on the first insulator 140, thereby preventing the terminal post base 130 from rotating relative to the first insulator 140, and improving the qualified rate and efficiency of the battery 100 in production.

In a specific implementation, one of the first limiting part 133 and the second limiting part 142 may be a groove, and the other may be a protrusion. Specifically, as shown in FIGS. 5 and 6, the first limiting part 133 is a protrusion provided on a side of the body 131 facing the housing 120, and the second limiting part 142 is a groove provided on a side of the first insulator 140 away from the housing 120. Or, the first limiting part 133 is a groove provided on a side of the body 131 close to the housing 120, and the second limiting part 142 is a protrusion provided on a side of the first insulator 140 facing the housing 120.

In the foregoing embodiments, the first limiting part 133 may be located on a side of the body 131 facing the battery cell 110, and the second limiting part 142 is provided facing the body 131.

In the foregoing embodiments, there may be a plurality of first limiting parts 133, and the plurality of first limiting parts 133 are arranged on the body 131 side by side. Correspondingly, there are also a plurality of second limiting parts 142 on the first insulator. When the body 131 of the terminal post base 130 is assembled with the first insulator 140, the plurality of first limiting parts 133 on the body 131 are simultaneously snap-fitted with the plurality of second limiting parts 142 on the first insulator 140, further preventing the terminal post base 130 from rotating relative to the first insulator 140, improving the stability and reliability of the assembly between the terminal post base 130 and the first insulator 140, and improving the qualified rate of the battery 100 in production.

As shown in FIGS. 4 to 6, the foregoing embodiments further include a conductive connector 150, which is located in the housing 120 and connected with a tab of the battery cell 110. Specifically, the conductive connector 150 may be connected between the positive electrode of the battery cell 110 and the terminal post 132, so as to transfer the electrical property of the positive electrode of the battery cell 110 to the terminal post 132, and then lead the electrical property out of the housing 120 through the terminal post 132. Providing the conductive connector 150 may enable a more stable connection between the battery cell 110 and the terminal post 132.

In the foregoing embodiments, there may be a space between the fourth limiting part 122 and the conductive connector 150 to prevent the fourth limiting part 122 from coming into electrical contact with the conductive connector 150.

In the foregoing embodiments, the fourth limiting part 122 may be processed into a groove as shown in FIGS. 5 and 6, where a bottom of the groove protrudes toward an inner side of the housing 120, and a fifth limiting part 162 may be provided on a side of a second insulator 160 close to the housing 120, and the fourth limiting part 122 is simultaneously snap-fitted with the third limiting part 143 and the fifth limiting part 162. Apparently, other limiting part may be separately arranged on the inner side wall of the housing 120 to realize the snap-fitting with the fifth limiting part 162. By arranging the fifth limit part 162 to snap-fit with the inner wall of the housing 120, it is possible to prevent the second insulator 160 from rotating relative to the housing 120, and improve the stability and reliability of the assembly between the second insulator 160 and the housing 120. The fifth limiting part 162 may be a through hole as shown in FIG. 5, and apparently, the fifth limiting part 162 may also be a groove structure, and there is no specific limit on this here.

In the foregoing embodiments, a second insulator 160 may be further included, the second insulator 160 is located in the housing 120, and is isolated between the housing 120 and the conductive connector 150, and the second insulator 160 and the conductive connector are snap-fitted with each other. A main function of the second insulator 160 is to isolate the housing 120 (the negative electrode of the battery 100) from the conductive connector 150 (the positive electrode of the battery 100) to ensure that the positive and negative electrodes of the battery 100 do not interfere with each other. One of the assembly methods of the conductive connector 150 and the second insulator 160 is shown in FIG. 6, in which the second insulator 160 and the conductive connector 150 may be respectively provided with a second positioning hole 161 and a third positioning hole 151, and the terminal post 132 on the terminal post base 130 may be sequentially introduced into the first positioning hole 141, the terminal post hole 121, the second positioning hole 161 and the third positioning hole 151.

In the foregoing embodiments, a sixth limiting part 163 may be provided on a side of the second insulator 160 facing away from the housing 120, and a seventh limiting part 152 is provided on a side of the conductive connector 150 close to the second insulator 160, and the sixth limiting part 163 and the seventh limiting part 152 are snap-fitted with each other. Through the snap-fitting between the sixth limiting part 163 and the seventh limiting part 152, it is possible to prevent the conductive connector 150 from rotating relative to the second insulator 160, improving the stability and reliability of the assembly between the conductive connector 150 and the second insulator 160. Specifically, the sixth limiting part 163 may be a protrusion facing the conductive connector 150 as shown in FIG. 5, and the seventh limiting part 152 may be a groove facing the second insulator 160.

In the foregoing embodiments, shapes of the first limit part 133, the second limit part 142, the third limit part 143, the fourth limit part 122, the sixth limit part 163 and the seventh limit part 152 may be square, circular or triangular.

In the foregoing embodiments, diameters of the first limiting part 133, the second limiting part 142, the third limiting part 143, the fourth limiting part 122, the sixth limiting part 163 and the seventh limiting part 152 are all greater than 0.5 mm.

The battery 100 provided by the embodiments of the present invention includes a battery cell 110, a housing 120, a terminal post base 130 and a first insulator 140, where the housing 120 is provided with an accommodating cavity, and the battery cell 110 is arranged in the accommodating cavity; the terminal post base 130 includes a body 131 and a terminal post 132, a terminal post hole 121 is arranged on a side wall of the housing 120, the first insulator 140 is arranged between the housing 120 and the body 131, and a first positioning hole 141 opposite to the terminal post hole 121 is arranged on the first insulator 140, and the terminal post 132 sequentially passes through the first positioning hole 141 and the terminal post hole 121, and the terminal post 132 is connected to a tab of the battery cell 110; the first insulator 140 is further provided with a third limiting part 143, and an outer side wall of the housing 120 is provided with a fourth limiting part 122, and the third limiting part 143 is snap-fitted with the fourth limiting part 122. In the battery 100 provided in the embodiments of the present invention, by arranging the third limiting part 143 on the first insulator 140 and arranging the fourth limiting part 122 matched with the third limiting part 143 on the outer side wall of the housing 120, when the first insulator 140 is assembled with the housing 120 of the battery 100, the third limiting part 143 on the first insulator 140 may be snap-fitted with the fourth limiting part 122 on the housing 120, thereby preventing the first insulator 140 from rotating relative to the housing 120 of the battery 100, and improving the qualified rate and efficiency of the battery 100 in production.

In addition, the present invention provides an electronic product, which includes the battery 100 according to any one of the foregoing embodiments, the battery 100 includes a battery cell 110, a housing 120, a terminal post base 130 and a first insulator 140, where the housing 120 is provided with an accommodating cavity, and the battery cell 110 is arranged in the accommodating cavity; the terminal post base 130 includes a body 131 and a terminal post 132, a terminal post hole 121 is arranged on a side wall of the housing 120, the first insulator 140 is arranged between the housing 120 and the body 131, and a first positioning hole 141 opposite to the terminal post hole 121 is arranged on the first insulator 140, and the terminal post 132 sequentially passes through the first positioning hole 141 and the terminal post hole 121, and the terminal post 132 is connected to a tab of the battery cell 110; the first insulator 140 is further provided with a third limiting part 143, and an outer side wall of the housing 120 is provided with a fourth limiting part 122, and the third limiting part 143 is snap-fitted with the fourth limiting part 122. In the battery 100 provided in the embodiments of the present invention, by arranging the third limiting part 143 on the first insulator 140 and arranging the fourth limiting part 122 matched with the third limiting part 143 on the outer side wall of the housing 120, when the first insulator 140 is assembled with the housing 120 of the battery 100, the third limiting part 143 on the first insulator 140 may be snap-fitted with the fourth limiting part 122 on the housing 120, thereby preventing the first insulator 140 from rotating relative to the housing 120 of the battery 100, and improving the qualified rate and efficiency of the battery 100 in production. The increase in productivity of the battery 100 may lower the cost of the battery 100, and the increase in the qualified rate of the battery 100 may improve the safety and service life of the battery 100. As the battery 100 in the foregoing embodiments is used in the electronic product provided by the present embodiment, the cost of the electronic product is reduced, and the safety and service life of the electronic product are improved.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some or all technical features therein; and these modifications or substitutions do not make the essence of the corresponding technical solutions depart from the scope of the technical solutions of embodiments of the present invention.

## Claims

1. A battery, comprising a battery cell, a housing, a terminal post base and a first insulator, wherein the housing is provided with an accommodating cavity, and the battery cell is arranged in the accommodating cavity;
the terminal post base comprises a body and a terminal post, a terminal post hole is arranged on a side wall of the housing, the first insulator is arranged between the housing and the body, and the first insulator provided with a first positioning hole opposite to the terminal post hole, and the terminal post sequentially passes through the first positioning hole and the terminal post hole, and the terminal post is connected to a tab of the battery cell; the first insulator is further provided with a third limiting part, and an outer side wall of the housing is provided with a fourth limiting part, and the third limiting part is snap-fitted with the fourth limiting part.

2. The battery according to claim 1, wherein one of the third limiting part and the fourth limiting part is a groove, and the other is a protrusion embedded in the groove.

3. The battery according to claim 1, wherein the body is provided with a first limiting part, and the first insulator is further provided with a second limiting part, and the first limiting part is snap-fitted with the second limiting part.

4. The battery according to claim 3, wherein one of the first limiting part and the second limiting part is a groove, and the other is a protrusion.

5. The battery according to claim 3, wherein the first limiting part is located on one side of the body facing the battery cell, and the second limiting part is arranged facing the body.

6. The battery according to claim 3, wherein there are a plurality of first limiting parts, which are arranged on the body side by side.

7. The battery according to any one of claims 3-6, further comprising a conductive connector, which is located in the housing and connected with the tab of the battery cell.

8. The battery according to claim 7, wherein there is a gap between the fourth limiting part and the conductive connector.

9. The battery according to claim 8, further comprising a second insulator, wherein the second insulator is located within the housing and is isolated between the housing and the conductive connector, and the second insulator and the conductive connector are snap-fitted with each other.

10. The battery according to claim 9, wherein a sixth limiting part is provided on a side of the second insulator facing away from the housing, and a seventh limiting part is provided on a side of the conductive connector close to the second insulator, and the sixth limiting part and the seventh limiting part are snap-fitted with each other.

11. The battery according to claim 10, wherein shapes of the first limiting part, the second limiting part, the third limiting part, the fourth limiting part, the sixth limiting part and the seventh limiting part are square, circular or triangular.

12. The battery according to claim 11, wherein diameters of the first limiting part, the second limiting part, the third limiting part, the fourth limiting part, the sixth limiting part and the seventh limiting part are all greater than 0.5 mm.

13. An electronic product, comprising the battery according to any one of claims 1-12.
